# EUROPEAN PATENT APPLICATION

(11) **EP 4 823 003 A1**
(43) Date of publication of application: **14.10.2026**
(21) Application number: 23960838.3
(22) Date of filing: 07.12.2023
(51) Int. Cl.: H04B 7/0413, H04B 7/0456, H04L 27/26

(54) **TERMINAL AND COMMUNICATION METHOD**

(71) Applicant: NTT DOCOMO, INC., Tokyo 100-6150 (JP)
(72) Inventor: SHIBAIKE, Naoya, Tokyo 100-6150 (JP); NAGATA, Satoshi, Tokyo 100-6150 (JP); PI, Qiping, Beijing, 100190 (CN); WANG, Jing, Beijing, 100190 (CN); HOU, Xiaolin, Beijing, 100190 (CN); LIU, Wenjia, Beijing, 100190 (CN); CHEN, Lan, Beijing, 100190 (CN)
(74) Representative: Hoffmann Eitle
(86) International application number: PCT/JP2023/043921
(87) International publication number: WO 2025/120826

(57) **Abstract**

A terminal includes: a control unit configured to determine a number of layers and a number of codewords applied to DFT-s-OFDM (Discrete Fourier transform - spread - Orthogonal Frequency Division Multiplexing) PUSCH (Physical Uplink Shared Channel), map each codeword to a plurality of layers, perform precoding as needed, configure DMRS (Demodulation reference signal) and PTRS (Phase tracking reference signal), and generate a signal of the DFT-s-OFDM PUSCH; and a transmission unit configured to transmit the signal of the DFT-s-OFDM PUSCH.

## Description

### TECHNICAL FIELD

The present invention relates to a terminal and a communication method in a wireless communication system.

### BACKGROUND ART

In 3GPP (registered trademark) (3rd Generation Partnership Project), in order to realize further larger system capacity, further faster data transmission speed, further lower latency in a wireless communication section, etc., a wireless communication method called "5G" or "NR (New Radio)" is being discussed (hereinafter, the wireless communication method is referred to as "NR"). In 5G, various wireless technologies and network architectures are being discussed to satisfy the requirements of a radio link delay of 1 ms or less while achieving throughput of 10 Gbps or more (e.g., Non-Patent Literature 1 and Non-Patent Literature 2).

In addition, various requirements for the next generation "6G" are being discussed. For example, the requirements include ultra broadband communication, mission critical communication, ultra massive connection, universal coverage, intelligent connection, ubiquitous sensing, and the like.

In order to satisfy the above-described requirements, as a new concept, the goals are set to be extensible (for example, capable of being effectively used in the future), easy-operational, customizable (for example, capable of being easily operational), and sustainable (for example, capable of reducing cost, capable of having a robust structure, capable of having resilience). In addition, as a guaranteed communication, always guaranteeing the minimum performance is being discussed.

### CITATION LIST

### Non-Patent Literature

Non-Patent Literature 1: 3GPP TS 38.300 V17.6.0 (2023-09)
Non-Patent Literature 2: 3GPP TS 38.401 V17.6.0 (2023-09)
Non-Patent Literature 3: 3GPP TS 38.331 V17.6.0 (2023-09)
Non-Patent Literature 4: 3GPP TS 38.213 V17.7.0 (2023-09)

### SUMMARY OF INVENTION

### TECHNICAL PROBLEM

In the next generation wireless communication system, in order to satisfy the requirements, a new waveform or an enhanced transmission method is expected to be supported. Therefore, a method of controlling a new waveform or an enhanced transmission method needs to be specified.

In view of the above-described points, the present invention has been made to control waveforms and transmission methods in the wireless communication system.

### SOLUTION TO PROBLEM

According to the disclosed technique, a terminal is provided. The terminal includes: a control unit configured to determine a number of layers and a number of codewords applied to DFT-s-OFDM (Discrete Fourier transform - spread - Orthogonal Frequency Division Multiplexing) PUSCH (Physical Uplink Shared Channel), map each codeword to a plurality of layers, perform precoding as needed, configure DMRS (Demodulation reference signal) and PTRS (Phase tracking reference signal), and generate a signal of the DFT-s-OFDM PUSCH; and a transmission unit configured to transmit the signal of the DFT-s-OFDM PUSCH.

### ADVANTAGEOUS EFFECTS OF INVENTION

According to the disclosed technique, waveforms and transmission methods can be controlled in the wireless communication system.

### BRIEF DESCRIPTION OF DRAWINGS

[Fig. 1] is a drawing illustrating a configuration example of a wireless communication system in an embodiment of the present invention.
[Fig. 2] is a flowchart for describing an example of transmission in an embodiment of the present invention.
[Fig. 3] is a drawing for describing an example of a codebook in an embodiment of the present invention.
[Fig. 4] is a drawing for describing an example of TPMI in an embodiment of the present invention.
[Fig. 5] is a drawing for describing an example of DMRS in an embodiment of the present invention.
[Fig. 6] is a drawing illustrating an example of a functional structure of a base station 10 in an embodiment of the present invention.
[Fig. 7] is a drawing illustrating an example of a functional configuration of a terminal 20 in an embodiment of the present invention.
[Fig. 8] is a drawing illustrating an example of a hardware structure of the base station 10 or the terminal 20 in an embodiment of the present invention.
[Fig. 9] is a drawing illustrating an example of a structure of a vehicle 2001 in an embodiment of the present invention.

### DESCRIPTION OF EMBODIMENTS

In the following, while referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. It should be noted that, although the conventional techniques may be the conventional LTE, the conventional techniques are not limited to the conventional LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. In addition, the above-described terms in NR correspond to NR-SS, NR-PSS, NR-SSS, NR-PBCH, NR-PRACH, etc. However, even when a signal is used for NR, the signal is not required to be referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression that a radio parameter, or the like is "configured" may mean that a predetermined value is pre-configured, or may mean that a radio parameter indicated by a base station 10 or a terminal 20 is configured.

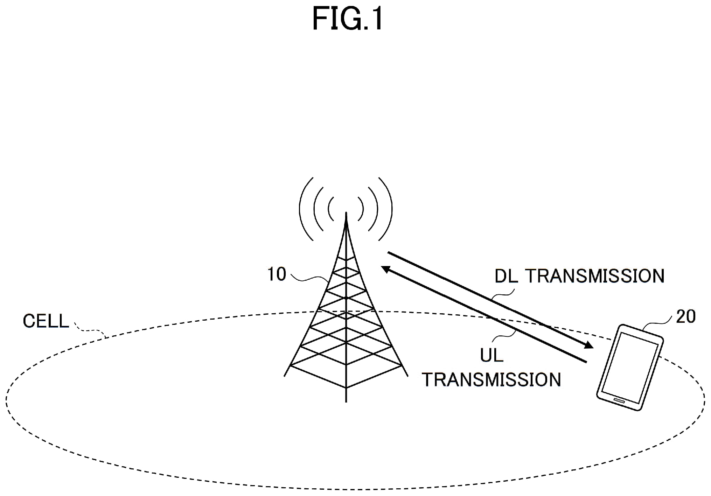

Fig. 1 is a drawing illustrating a configuration example of a wireless communication system according to an embodiment of the present invention. As illustrated in Fig. 1, a wireless communication system according to an embodiment of the present invention includes a base station 10 and a terminal 20. In Fig. 1, a single base station 10 and a single terminal 20 are illustrated as an example, but there may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. The base station 10 transmits a synchronization signal and system information to the terminal 20. The synchronization signal is, for example, an NR-PSS and/or an NR-SSS. The system information may be transmitted via an NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As shown in Fig. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals.

In addition, various requirements for the next generation "6G" are being discussed. For example, the requirements may include the ultra broadband communication, the mission critical communication, the ultra massive connection, the universal coverage, the intelligent connection, the ubiquitous sensing, and the like.

In addition, the requirements may include ultra high speed communication, large capacity communication, ultra coverage enhancement, ultra low energy consumption, low cost, ultra low latency, ultra high reliability communication, massive connectivity and sensing, and the like.

In order to satisfy the above-described requirements, as a new concept, the goals are set to be extensible (for example, capable of being effectively used in the future), easy-operational, customizable (for example, capable of being easily operational), and sustainable (for example, capable of reducing cost, capable of having a robust structure, capable of having resilience). In addition, as a guaranteed communication, always guaranteeing the minimum performance is being discussed.

Here, in the conventional technique, CP-OFDM (Cyclic Prefix OFDM) and DFT-s-OFDM (Discrete Fourier Transform - spread - OFDM) are used for the UL waveform. The default waveform for UL is CP-OFDM, and a higher layer parameter for enabling/disabling the transform precoder is configurable for Msg3, PUSCH, CG, MsgA, and DMRS (Demodulation reference signal) for PUCCH formats 3 and 4.

With respect to the above-described higher layer parameter, there are the following parameters, for example (refer to Non-Patent Literature 3).
- msg3-transformPrecoder, included in RACH-ConfigCommon. In a case where the field is absent, the UE disables the transform precoder.
- transformPrecoder, included in PUSCH-Config. In a case where the field is absent, the UE applies the value of msg3-transformPrecoder included in rach-ConfigCommon that is directly included in the BWP configuration.
- transformPrecoder, included in ConfiguredGrantConfig.
- msgA-TransformPrecoder-r16, included in MsgA-PUSCH-Config-r16.
- dmrs-UplinkTransformPrecodingPUCCH, included in PUCCH-Config. Used for DMRS for PUCCH formats 3 and 4.

In order to support two waveforms for UL, the following configurations are supported.
- DMRS-UplinkConfig
- PTRS-UplinkConfig

In addition, the dynamic waveform switching between two waveforms is supported for DG-PUSCH according to DCI indications (DCI format 0_1/0_2). The dynamic waveform switching is separately configured for each BWP in PUSCH-Config.

With respect to the precoding for PUSCH, non-coherent, partial-coherent, or fully-coherent codebooks are supported. Only rank 1 is supported for DFT-s-OFDM PUSCH. Up to the maximum rank 4 or 8 is supported for CP-OFDM PUSCH.

TPMI (Transmit precoding matrix indicator) and rank indication for PUSCH are supported. A different configuration of the maximum rank, antenna port, and full power mode is used for a different indication table. The rank and the TPMI index are indicated by bit fields of UL grant DCI.

DMRS antenna port indication for PUSCH is supported. Different indication tables are used based on the applicability of transform precoding, the rank, the DMRS type, and the DMRS maximum length. The DMRS ports and the DMRS length are indicated by bit fields of UL grant DCI.

With respect to the PTRS (Phase tracking reference signal) for PUSCH, the PTRS-DMRS association is indicated by UL grant DCI. The PTRS transmission and reception for PUSCH or PDSCH are supported.

Indication of DMRS antenna ports for PDSCH is supported. Different indication tables are used based on the DMRS type and the DMRS maximum length. The DMRS ports and the rank are determined based on the bit fields of DL grant DCI.

CP-OFDM and DFT-s-OFDM are supported for the conventional NR-PUSCH. The maximum layer 8 is supported for CP-OFDM. Only a single layer is supported for DFT-s-OFDM. Only CP-OFDM is supported for the conventional NR-PDSCH.

Here, DFT-s-OFDM is expected to be applied for DL as an enhancement of waveforms. In addition, a plurality of layers are expected to be supported for DFT-s-OFDM. The performance of the UE that is located within the short distance will be improved by higher rank DFT-s-OFDM transmission. The multi-layer transmission gain and the power gain can be obtained at the same time.

Accordingly, the following operation 1) to operation 9) related to the DFT-s-OFDM multi-layer transmission may be performed. Hereinafter, it is to be noted that PUSCH and/or PDSCH will be also described as PUSCH/PDSCH.

Operation 1) Applicability of multi-layer DFT-s-OFDM PUSCH/PDSCH
Operation 2) The number of layers of the multi-layer DFT-s-OFDM PUSCH/PDSCH
Operation 3) The codewords of the multi-layer DFT-s-OFDM PUSCH/PDSCH
Operation 4) Mapping between the number of layers and the number of codewords for multi-layer DFT-s-OFDM PUSCH/PDSCH
Operation 5) Mapping between the codewords and the layers for multi-layer DFT-s-OFDM
Operation 6) The precoders and codebooks for multi-layer DFT-s-OFDM PUSCH/PDSCH
Operation 7) Indication related to the precoding information and the number of layers for multi-layer DFT-s-OFDM PUSCH/PDSCH
Operation 8) Indication related to the DMRS antenna ports for multi-layer DFT-s-OFDM PUSCH/PDSCH
Operation 9) PTRS for multi-layer DFT-s-OFDM PUSCH/PDSCH

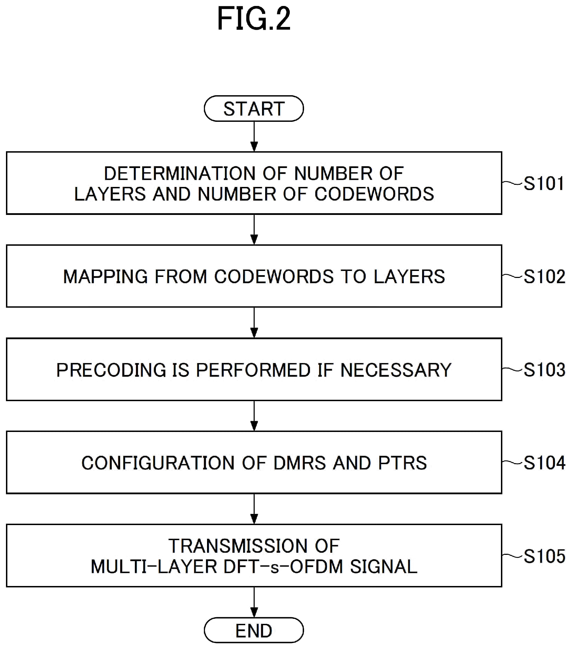

Fig. 2 is a flowchart for describing an example of transmission in an embodiment of the present invention. In step S101, the terminal 20 or the base station 10 determines the number of layers and the number of codewords. In step S102, the terminal 20 or the base station 10 performs codeword to layer mapping. In step S103, the terminal 20 or the base station 10 performs precoding as needed. In step S104, the terminal 20 or the base station 10 configures DMRS and PTRS. In step S105, the terminal 20 or the base station 10 transmits a multi-layer DFT-s-OFDM signal.

Hereinafter, the "operation 1) applicability of multi-layer DFT-s-OFDM PUSCH/PDSCH" will be described.

Operation 1-1) The UE may support the multi-layer DFT-s-OFDM for PUSCH transmission in the connected mode, or for PUSCH (for example, Msg3 PUSCH and/or MsgA PUSCH) transmission during the initial access.

The multi-layer DFT-s-OFDM may be supported for one of or a plurality of PUSCH types described in the following 1) and 2).

1) DG (Dynamic grant) - PUSCH scheduled by DCI. The DCI may be a predetermined DCI format and may be scrambled by a predetermined RNTI.
2) CG (Configured grant) - PUSCH without dynamic indication (for example, type 1 CG) and/or CG-PUSCH with dynamic indication (for example, type 2 CG)

Operation 1-2) The UE may support multi-layer DFT-s-OFDM for PDSCH. The multi-layer DFT-s-OFDM may be supported for PDSCH reception in the connected mode, or may be supported for PUSCH (for example, Msg3 PUSCH and/or MsgA PUSCH) transmission during the initial access.

The multi-layer DFT-s-OFDM may be supported for one of or a plurality of PDSCH types described in the following 1) and 2).

1) DG (Dynamic grant) - PDSCH scheduled by DCI. The DCI may be a predetermined DCI format and may be scrambled by a predetermined RNTI.
2) SPS (Semi persistent scheduling) - PDSCH.

According to the above-described operation 1), whether or not multi-layer DFT-s-OFDM PUSCH/PDSCH is to be used can be determined.

Hereinafter, the "operation 2) the number of layers of the multi-layer DFT-s-OFDM PUSCH/PDSCH" will be described.

Operation 2-1) With respect to the number of layers for the multi-layer DFT-s-OFDM PUSCH, the maximum number specified in the technical specification may be supported. The maximum number of layers for DFT-s-OFDM PUSCH may be assumed to be X, and the multi-layer DFT-s-OFDM with the number of layers equal to or less than X may be applied to PUSCH. The maximum number of layers for the multi-layer DFT-s-OFDM PUSCH is not required to be greater than a specific value (for example, 2 or 4), or may be greater than a specific value (for example, 8 or 12).

The maximum number of layers for the multi-layer DFT-s-OFDM PUSCH may be equal to or less than the maximum number of layers for CP-OFDM PUSCH. The maximum number of layers for the multi-layer DFT-s-OFDM PUSCH may be equal to or less than the maximum number of layers for DFT-s-OFDM PDSCH.

The UE may support the maximum number of layers for DFT-s-OFDM PUSCH as described in at least one of the following 1) to 4).
1) The UE may report the supported maximum number of layers for DFT-s-OFDM PUSCH as a capability report.
2) The maximum number of layers for DFT-s-OFDM supported by the UE may be determined depending on the maximum number of layers supported for CP-OFDM. For example, the maximum number of layers for DFT-s-OFDM may be a certain percentage of the maximum number of layers for CP-OFDM. For example, the maximum number of layers for DFT-s-OFDM may be a value obtained by dividing the maximum number of layers for CP-OFDM by N. N may be greater than 1, or may be equal to or less than 1. The maximum number of layers for DFT-s-OFDM may be a maximum number of layers that is less than the maximum number of layers for CP-OFDM and a predefined value. For example, the maximum number of layers for DFT-s-OFDM may be a smaller value between the maximum number of layers for CP-OFDM and the predefined value X (min{the maximum number of layers for CP-OFDM, X}). X may be a value defined in the technical specification.
3) The maximum number of layers for DFT-s-OFDM supported by the UE may be determined based on the maximum number of codewords for DFT-s-OFDM PUSCH and on the codeword-to-layer mapping. For example, in a case where the UE supports K codewords for DFT-s-OFDM PUSCH, the UE may support X0 * K as the maximum number of layers for DFT-s-OFDM. X0 may be the maximum number of layers per codeword, and X0 may be defined by the technical specification or may be reported according to the UE capability. The maximum number of layers supported by the UE may be equal to the maximum number of codewords supported by the UE.
4) The maximum number of layers for multi-layer DFT-s-OFDM PUSCH supported by the UE may be equal to, may be greater than, may be not greater than, may be less than, or may be not less than, the maximum number of layers for multi-layer DFT-s-OFDM PDSCH supported by the UE.

The maximum rank for DFT-s-OFDM PUSCH may be configured as described in the following 1) to 4).
1) The maximum rank for DFT-s-OFDM PUSCH may be explicitly configured by the gNB. For example, the maximum rank for DFT-s-OFDM PUSCH may be configured independently from the maximum rank for CP-OFDM PUSCH.

For example, a common maximum rank may be configured in the information element pusch-Config. The common maximum rank may be applied to all DFT-s-OFDM DG-PUSCHs and/or all DFT-s-OFDM CG-PUSCHs.

For example, the maximum rank may be configured separately for each UL grant DCI format. In other words, the maximum rank may be configured separately for each PUSCH scheduled by a DCI format. The maximum rank may be configured in the information element ConfiguredGrantConfig for each CG-PUSCH configuration. In addition, the configuration of the maximum rank for CP-OFDM may be applied for DFT-s-OFDM.

For example, the maximum rank for DFT-s-OFDM PUSCH may be determined depending on the maximum rank configuration for CP-OFDM PUSCH. For example, the maximum number of ranks for DFT-s-OFDM may be a certain percentage of the maximum number of ranks for CP-OFDM. For example, the maximum number of ranks for DFT-s-OFDM may be a value obtained by dividing the maximum number of ranks for CP-OFDM by N. N may be greater than 1, or may be equal to or less than 1. The maximum number of ranks for DFT-s-OFDM may be a maximum number of ranks that is less than the maximum number of ranks for CP-OFDM and a predefined value. For example, the maximum number of ranks for DFT-s-OFDM may be a smaller value between the maximum number of ranks for CP-OFDM and the predefined value X (min{the maximum number of ranks for CP-OFDM, X}). X may be a value defined in the technical specification.

3) The maximum number of ranks for DFT-s-OFDM supported by the UE may be determined based on the maximum number of codewords for DFT-s-OFDM PUSCH supported by the UE and on the codeword-to-layer mapping. For example, in a case where the UE supports K codewords for DFT-s-OFDM PUSCH, the UE may support X0 * K as the maximum number of ranks for DFT-s-OFDM. X0 may be the maximum number of ranks per codeword, and X0 may be defined by the technical specification or may be reported according to the UE capability. The maximum number of ranks supported by the UE may be equal to the maximum number of codewords supported by the UE.

4) The maximum number of ranks for multi-layer DFT-s-OFDM PUSCH supported by the UE may be equal to, may be greater than, may be not greater than, may be less than, or may be not less than, the maximum number of ranks for multi-layer DFT-s-OFDM PDSCH supported by the UE.

The scheduled rank or actual rank for DFT-s-OFDM PUSCH transmission may be indicated by TRI (Transmit Rand Indicator) and/or TPMI in a case of codebook-based PUSCH transmission, and may be indicated by SRI (SRS resource indicator) in a case of non-codebook-based PUSCH transmission. In addition, the scheduled rank or actual rank for DFT-s-OFDM PUSCH transmission may be explicitly indicated by a field in the scheduling DCI. In addition, the scheduled rank or actual rank for DFT-s-OFDM PUSCH transmission may be equal to the number of codewords scheduled by the PUSCH.

Operation 2-2) With respect to the number of layers for the multi-layer DFT-s-OFDM PDSCH, the maximum number specified in the technical specification may be supported. The maximum number of layers for DFT-s-OFDM PDSCH may be assumed to be X, and the multi-layer DFT-s-OFDM with the number of layers equal to or less than X may be applied to PDSCH. The maximum number of layers for the multi-layer DFT-s-OFDM PDSCH is not required to be greater than a specific value (for example, 2 or 4), or may be greater than a specific value (for example, 8 or 12).

The maximum number of layers for the multi-layer DFT-s-OFDM PDSCH may be equal to or less than the maximum number of layers for CP-OFDM PDSCH. The maximum number of layers for the multi-layer DFT-s-OFDM PDSCH may be equal to or less than the maximum number of layers for DFT-s-OFDM PUSCH.

The UE may support the maximum number of layers for DFT-s-OFDM PDSCH as described in at least one of the following 1) to 4).
1) The UE may report the supported maximum number of layers for DFT-s-OFDM PDSCH as a capability report.
2) The maximum number of layers for DFT-s-OFDM supported by the UE may be determined depending on the maximum number of layers supported for CP-OFDM. For example, the maximum number of layers for DFT-s-OFDM may be a certain percentage of the maximum number of layers for CP-OFDM. For example, the maximum number of layers for DFT-s-OFDM may be a value obtained by dividing the maximum number of layers for CP-OFDM by N. N may be greater than 1, or may be equal to or less than 1. The maximum number of layers for DFT-s-OFDM may be a maximum number of layers that is less than the maximum number of layers for CP-OFDM and a predefined value. For example, the maximum number of layers for DFT-s-OFDM may be a smaller value between the maximum number of layers for CP-OFDM and the predefined value X (min{the maximum number of layers for CP-OFDM, X}). X may be a value defined in the technical specification.
3) The maximum number of layers for DFT-s-OFDM supported by the UE may be determined based on the maximum number of codewords for DFT-s-OFDM PDSCH and on the codeword-to-layer mapping. For example, in a case where the UE supports K codewords for DFT-s-OFDM PDSCH, the UE may support X0 * K as the maximum number of layers for DFT-s-OFDM. X0 may be the maximum number of layers per codeword, and X0 may be defined by the technical specification or may be reported according to the UE capability. The maximum number of layers supported by the UE may be equal to the maximum number of codewords supported by the UE.
4) The maximum number of layers for multi-layer DFT-s-OFDM PDSCH supported by the UE may be equal to, may be greater than, may be not greater than, may be less than, or may be not less than, the maximum number of layers for multi-layer DFT-s-OFDM PUSCH supported by the UE.

The maximum rank for DFT-s-OFDM PDSCH may be configured as described in the following 1) to 4).
1) The maximum rank for DFT-s-OFDM PDSCH may be explicitly configured by the gNB. For example, the maximum rank for DFT-s-OFDM PUSCH may be configured independently from the maximum rank for CP-OFDM PDSCH.

For example, a common maximum rank may be configured in the information element pdsch-Config. The common maximum rank may be applied to all DFT-s-OFDM DG-PDSCHs and/or all DFT-s-OFDM SPS-PUSCHs.

For example, the maximum rank may be configured separately for each DL grant DCI format. In other words, the maximum rank may be configured separately for each PDSCH scheduled by a DCI format. The maximum rank may be configured in the information element SPS-Config for each SPS-PDSCH configuration.

For example, the maximum rank for DFT-s-OFDM PDSCH may be determined depending on the maximum rank configuration for CP-OFDM PDSCH. For example, the maximum number of ranks for DFT-s-OFDM may be a certain percentage of the maximum number of ranks for CP-OFDM. For example, the maximum number of ranks for DFT-s-OFDM may be a value obtained by dividing the maximum number of ranks for CP-OFDM by N. N may be greater than 1, or may be equal to or less than 1. The maximum number of ranks for DFT-s-OFDM may be a maximum number of ranks that is less than the maximum number of ranks for CP-OFDM and a predefined value. For example, the maximum number of ranks for DFT-s-OFDM may be a smaller value between the maximum number of ranks for CP-OFDM and the predefined value X (min{the maximum number of ranks for CP-OFDM, X}). X may be a value defined in the technical specification.

3) The maximum number of ranks for DFT-s-OFDM supported by the UE may be implicitly determined based on the maximum number of codewords for DFT-s-OFDM PUSCH supported by the UE and on the codeword-to-layer mapping. For example, in a case where the UE supports K codewords for DFT-s-OFDM PDSCH, the UE may support X0 * K as the maximum number of ranks for DFT-s-OFDM. X0 may be the maximum number of ranks per codeword, and X0 may be defined by the technical specification or may be reported according to the UE capability. The maximum number of ranks supported by the UE may be equal to the maximum number of codewords supported by the UE.

4) The maximum number of ranks for multi-layer DFT-s-OFDM PDSCH supported by the UE may be equal to, may be greater than, may be not greater than, may be less than, or may be not less than, the maximum number of ranks for multi-layer DFT-s-OFDM PUSCH supported by the UE.

The scheduled rank for DFT-s-OFDM PDSCH transmission may be determined based on the antenna port indication. In addition, the scheduled rank for DFT-s-OFDM PDSCH transmission may be explicitly indicated by a field in the scheduling DCI. In addition, the scheduled rank for DFT-s-OFDM PDSCH transmission may be equal to the number of codewords scheduled by the PDSCH.

According to the above-described operation 2), the maximum number of layers and the maximum number of ranks applied to the multi-layer DFT-s-OFDM can be determined.

Hereinafter, the "operation 3) the codewords of the multi-layer DFT-s-OFDM PUSCH/PDSCH" will be described.

Operation 3-1) The number of codewords for multi-layer DFT-s-OFDM PUSCH may be determined as described below.

The maximum number of codewords for multi-layer DFT-s-OFDM PUSCH may be specified in the technical specification. The maximum number of codewords for multi-layer DFT-s-OFDM PUSCH may be equal to 1 or 2, or may be greater than 2. The maximum number of codewords for multi-layer DFT-s-OFDM PUSCH may be equal to, may be greater than, or may be less than the maximum number of codewords for CP-OFDM PUSCH. The maximum number of codewords for multi-layer DFT-s-OFDM may be equal to, may be greater than, or may be less than the maximum number of codewords for DFT-s-OFDM PDSCH. The maximum number of codewords for DFT-s-OFDM may be determined depending on the maximum number of layers for DFT-s-OFDM PUSCH, based on the codeword-to-layer mapping. For example, in a case where the maximum number of layers Y for DFT-s-OFDM PUSCH is supported in the technical specification, Y / X0 may be supported as the maximum number of codewords for DFT-s-OFDM in the technical specification. X0 may be the maximum number of layers per codeword. The maximum number of codewords for DFT-s-OFDM in the technical specification may be equal to the maximum number of layers in the technical specification.

The UE may support the maximum number of codewords for DFT-s-OFDM PUSCH as described in at least one of the following 1) to 4).
1) The UE may report the supported maximum number of codewords for DFT-s-OFDM PUSCH as a capability report.
2) The maximum number of codewords for DFT-s-OFDM supported by the UE may be determined depending on the maximum number of codewords supported for CP-OFDM. For example, the maximum number of codewords for DFT-s-OFDM may be a certain percentage of the maximum number of codewords for CP-OFDM. For example, the maximum number of codewords for DFT-s-OFDM may be a value obtained by dividing the maximum number of codewords for CP-OFDM by N. N may be greater than 1, or may be equal to or less than 1. The maximum number of codewords for DFT-s-OFDM may be a maximum number of codewords that is less than the maximum number of codewords for CP-OFDM and a predefined value. For example, the maximum number of codewords for DFT-s-OFDM may be a smaller value between the maximum number of codewords for CP-OFDM and a predefined value X (min{the maximum number of codewords for CP-OFDM, X}). X may be a value defined in the technical specification.
3) The maximum number of codewords for DFT-s-OFDM PUSCH supported by the UE may be determined based on the maximum number of layers for DFT-s-OFDM PUSCH and on the codeword-to-layer mapping. For example, in a case where the UE supports up to Y layers for DFT-s-OFDM PUSCH, the UE may support Y / X0 as the maximum number of codewords for DFT-s-OFDM. X0 may be the maximum number of layers per codeword, and X0 may be defined by the technical specification or may be reported according to the UE capability. The maximum number of codewords supported by the UE may be equal to the maximum number of layers supported by the UE.
4) The maximum number of codewords for multi-layer DFT-s-OFDM PUSCH supported by the UE may be equal to, may be greater than, may be not greater than, may be less than, or may be not less than, the maximum number of codewords for multi-layer DFT-s-OFDM PDSCH supported by the UE.

The UE may configure the maximum number of codewords for DFT-s-OFDM PUSCH as described in at least one of the following 1) to 3).
1) The maximum number of codewords configured for multi-layer DFT-s-OFDM PUSCH may be explicitly configured by RRC signaling. For example, two codewords for DFT-s-OFDM PUSCH may be configured, by the RRC parameter included in pusch-Config, to be enabled or disabled for each UL grant DCI format. For example, two codewords for DFT-s-OFDM PUSCH may be configured, by the RRC parameter included in ConfiguredGrantConfig, to be enabled or disabled for each CG-PUSCH configuration.
2) The maximum number of codewords configured for multi-layer DFT-s-OFDM PUSCH may be determined based on the maximum rank configured for multi-layer DFT-s-OFDM PUSCH and on the codeword-to-layer mapping. For example, in a case where the UE configures up to Y layers for DFT-s-OFDM PUSCH, the UE may configure Y / X0 as the maximum number of codewords for DFT-s-OFDM. X0 may be the maximum number of layers per codeword, and X0 may be defined by the technical specification or may be configured by the base station 10. The maximum number of codewords configured by the UE may be equal to the maximum number of layers supported by the UE.
3) The maximum number of codewords for DFT-s-OFDM PUSCH configured by the UE may be determined depending on the maximum number of codewords configured for CP-OFDM. For example, the maximum number of codewords for DFT-s-OFDM may be a certain percentage of the maximum number of codewords for CP-OFDM. For example, the maximum number of codewords for DFT-s-OFDM may be a value obtained by dividing the maximum number of codewords for CP-OFDM by N. N may be greater than 1, or may be equal to or less than 1. The maximum number of codewords for DFT-s-OFDM may be a maximum number of codewords that is less than the maximum number of codewords for CP-OFDM and a predefined value. For example, the maximum number of codewords for DFT-s-OFDM may be a smaller value between the maximum number of codewords for CP-OFDM and a predefined value X (min{the maximum number of codewords for CP-OFDM, X}). X may be a value defined in the technical specification. In addition, the maximum number of codewords for multi-layer DFT-s-OFDM PUSCH configured by the UE may be equal to, may be greater than, may be not greater than, may be less than, or may be not less than, the maximum number of codewords for multi-layer DFT-s-OFDM PDSCH configured by the UE.

In a case where a number of codewords greater than 1 is configured or supported, the number of scheduled or actual codewords for DFT-s-OFDM PUSCH may be determined as described in the following 1) or 2).
1) The scheduled or actual number of codewords for DFT-s-OFDM PUSCH may be determined based on the scheduled number of layers and on the codeword-to-layer mapping. For example, in a case where Y layers are scheduled for DFT-s-OFDM PUSCH, the number of codewords may be determined according to ceil(Y / X0). X0 may be the maximum number of layers per codeword, and X0 may be defined by the technical specification or may be configured by the base station 10. The maximum number of codewords configured by the UE may be equal to the maximum number of layers supported by the UE. For example, the scheduled or actual number of codewords for DFT-s-OFDM PUSCH may be equal to the smallest value between the scheduled number of layers configured for DFT-s-OFDM PUSCH and the supported or configured maximum number of codewords.
2) The scheduled or actual number of codewords for DFT-s-OFDM PUSCH may be indicated by scheduling DCI. For example, the indication may be performed by a field explicitly indicating the number of codewords. For example, the number of codewords may be implicitly determined based on a bit or value obtained by combining other fields (MCS and RV) included in the scheduling DCI. For example, two codewords may be scheduled when values of MCS and RV satisfy a condition (for example, MCS = x and RV = y).

Operation 3-2) The number of codewords for multi-layer DFT-s-OFDM PDSCH may be determined as described below.

The maximum number of codewords for multi-layer DFT-s-OFDM PDSCH may be specified in the technical specification. The maximum number of codewords for multi-layer DFT-s-OFDM PDSCH may be equal to 1 or 2, or may be greater than 2. The maximum number of codewords for multi-layer DFT-s-OFDM PDSCH may be equal to, may be greater than, or may be less than the maximum number of codewords for CP-OFDM PDSCH. The maximum number of codewords for multi-layer DFT-s-OFDM PDSCH may be equal to, may be greater than, or may be less than the maximum number of codewords for DFT-s-OFDM PUSCH. The maximum number of codewords for multi-layer DFT-s-OFDM may be determined depending on the maximum number of layers for DFT-s-OFDM, based on the codeword-to-layer mapping. For example, in a case where the maximum number of layers Y for DFT-s-OFDM PDSCH is supported in the technical specification, Y / X0 may be supported as the maximum number of codewords for DFT-s-OFDM in the technical specification. X0 may be the maximum number of layers per codeword. The maximum number of codewords for DFT-s-OFDM in the technical specification may be equal to the maximum number of layers in the technical specification.

The UE may support the maximum number of codewords for DFT-s-OFDM PDSCH as described in at least one of the following 1) to 4).
1) The UE may report the supported maximum number of codewords for DFT-s-OFDM PDSCH as a capability report.
2) The maximum number of codewords for DFT-s-OFDM supported by the UE may be determined depending on the maximum number of codewords supported for CP-OFDM. For example, the maximum number of codewords for DFT-s-OFDM may be a certain percentage of the maximum number of codewords for CP-OFDM. For example, the maximum number of codewords for DFT-s-OFDM may be a value obtained by dividing the maximum number of codewords for CP-OFDM by N. N may be greater than 1, or may be equal to or less than 1. The maximum number of codewords for DFT-s-OFDM may be a maximum number of codewords that is less than the maximum number of codewords for CP-OFDM and a predefined value. For example, the maximum number of codewords for DFT-s-OFDM may be a smaller value between the maximum number of codewords for CP-OFDM and a predefined value X (min{the maximum number of codewords for CP-OFDM, X}). X may be a value defined in the technical specification.
3) The maximum number of layers for DFT-s-OFDM PDSCH supported by the UE may be determined based on the maximum number of layers for DFT-s-OFDM PDSCH and on the codeword-to-layer mapping. For example, in a case where the UE supports up to Y layers for DFT-s-OFDM PDSCH, the UE may support Y / X0 as the maximum number of codewords for DFT-s-OFDM. X0 may be the maximum number of layers per codeword, and X0 may be defined by the technical specification or may be reported according to the UE capability. The maximum number of codewords supported by the UE may be equal to the maximum number of layers supported by the UE.
4) The maximum number of codewords for multi-layer DFT-s-OFDM PDSCH supported by the UE may be equal to, may be greater than, may be not greater than, may be less than, or may be not less than, the maximum number of codewords for multi-layer DFT-s-OFDM PUSCH supported by the UE.

The UE may configure the maximum number of codewords for DFT-s-OFDM PDSCH as described in at least one of the following 1) to 3).
1) The maximum number of codewords configured for multi-layer DFT-s-OFDM PDSCH may be explicitly configured by RRC signaling. For example, two codewords for DFT-s-OFDM PDSCH may be configured, by the RRC parameter included in pdsch-Config, to be enabled or disabled for each DL grant DCI format. For example, two codewords for DFT-s-OFDM PDSCH may be configured, by the RRC parameter included in SPS-Config, to be enabled or disabled for each SPS-PDSCH configuration.
2) The maximum number of codewords configured for multi-layer DFT-s-OFDM PDSCH may be determined based on the maximum rank configured for multi-layer DFT-s-OFDM PDSCH and on the codeword-to-layer mapping. For example, in a case where the UE configures up to Y layers for DFT-s-OFDM PDSCH, the UE may configure Y / X0 as the maximum number of codewords for DFT-s-OFDM. X0 may be the maximum number of layers per codeword, and X0 may be defined by the technical specification or may be configured by the base station 10. The maximum number of codewords configured by the UE may be equal to the maximum number of layers supported by the UE.
3) The maximum number of codewords for DFT-s-OFDM PDSCH configured by the UE may be determined depending on the maximum number of codewords configured for CP-OFDM. For example, the maximum number of codewords for DFT-s-OFDM may be a certain percentage of the maximum number of codewords for CP-OFDM. For example, the maximum number of codewords for DFT-s-OFDM may be a value obtained by dividing the maximum number of codewords for CP-OFDM by N. N may be greater than 1, or may be equal to or less than 1. The maximum number of codewords for DFT-s-OFDM may be a maximum number of codewords that is less than the maximum number of codewords for CP-OFDM and a predefined value. For example, the maximum number of codewords for DFT-s-OFDM may be a smaller value between the maximum number of codewords for CP-OFDM and a predefined value X (min{the maximum number of codewords for CP-OFDM, X}). X may be a value defined in the technical specification. In addition, the maximum number of codewords for multi-layer DFT-s-OFDM PDSCH configured by the UE may be equal to, may be greater than, may be not greater than, may be less than, or may be not less than, the maximum number of codewords for multi-layer DFT-s-OFDM PUSCH configured by the UE.

In a case where a number of codewords greater than 1 is configured or supported, the number of scheduled or actual codewords for DFT-s-OFDM PDSCH may be determined as described in the following 1) or 2).
1) The scheduled number of codewords for DFT-s-OFDM PDSCH may be indicated by DL grant DCI. For example, the number of codewords may be indicated by a field for explicitly indicating the number of codewords, or may be implicitly determined based on a bit or value obtained by combining other fields (MCS and RV). For example, two codewords may be scheduled when values of MCS and RV satisfy a condition (for example, MCS = x and RV = y).
2) The scheduled or actual number of codewords for DFT-s-OFDM PDSCH may be determined based on the scheduled number of layers. For example, in a case where Y layers are scheduled for DFT-s-OFDM PDSCH, the number of codewords may be determined according to ceil(Y / X0). X0 may be the maximum number of layers per codeword, and X0 may be defined by the technical specification or may be configured by the base station 10. The scheduled number of codewords may be equal to the scheduled number of layers for DFT-s-OFDM PDSCH. For example, the scheduled number of codewords for DFT-s-OFDM PDSCH may be equal to the smallest value between the scheduled number of layers configured for DFT-s-OFDM PDSCH and the supported or configured maximum number of codewords.

According to the above-described operation 3), the number of codewords applied to multi-layer DFT-s-OFDM can be determined.

Hereinafter, "operation 4) mapping between the number of layers and the number of codewords for multi-layer DFT-s-OFDM PUSCH/PDSCH" will be described.

The relationship between the number of codewords and the number of layers for multi-layer DFT-s-OFDM may be defined as described in the following option 1) or option 2).

Option 1) The corresponding or mapping number of codewords may be determined for a certain number of layers. When the number of layers is assumed to be Y (Y > 0),
- In a case where Y is equal to or less than X(1), Y layers may be mapped to one codeword.
- In a case where Y is greater than X(1) and is equal to or less than X(2) , Y layers may be mapped to two codewords.
- Similarly, in a case where Y is greater than X(k-1) and is equal to or less than X(k), Y layers may be mapped to k codewords.

It is to be noted that X(k), where k = 1, 2, ..., N, indicates a threshold value of the number of layers in order to determine k codewords. The value of X(k) may be defined in the technical specification, and/or may be configured by the base station 10. The value of X(k) may be X0 * k. X0 may be defined in the technical specification. For example, X0 may be 4, may be less than 4, or may be greater than 4. X0 corresponds to the maximum number of layers per codeword. Option 1 in Table 1 illustrates an example of X0 = 4.

**[Table 1]**

| **Number of layers** | **Number of codewords** | |
|---|---|---|
| | Option 1 | Option 2 |
| 1 | 1 | 1 |
| 2 | 1 | k*∈*{1, 2} |
| 3 | 1 | k*∈*{1, 2, 3} |
| 4 | 1 | k*∈*{1, 2, 3, 4} |
| 5 | 2 | k*∈*{2, 3, 4} |
| 6 | 2 | k*∈*{2, 3, 4} |
| 7 | 2 | k*∈*{2, 3, 4} |
| 8 | 2 | k*∈*{2, 3, 4} |
| 9 | 3 | k*∈*{3, 4} |
| 10 | 3 | k*∈*{3, 4} |
| 11 | 3 | k*∈*{3, 4} |
| 12 | 3 | k*∈*{3, 4} |

Option 2) With respect to a certain number of layers, mapping up to k codewords may be enabled to be performed. The k is a value that is not greater than the number of layers and that is not greater than the maximum number of codewords supported by the technical specification. A set of candidate values for the number of codewords may correspond to the number of layers greater than 1. When the number of layers is assumed to be Y (Y > 0),
- In a case where Y is equal to 1, one codeword is mapped to one layer.
- In a case where Y > 1, k codewords are mapped to Y layers. The k is an integer, is equal to or greater than k_min, and is equal to or less than k_max.

The k_max is defined as k_max = min(Y, M), where M is the maximum number of codewords supported in the technical specification, the maximum number of codewords supported by the UE capability, or the maximum number of codewords configured by the base station 10.

In a case where there is no restriction for the number of layers to which one codeword is mapped, K_min = 1. Alternatively, in a case where the number of layers to which one codeword is mapped is not greater than X0, K_min = floor (Y / X0). Option 2 in Table 1 illustrates an example of X0 = 4.

The determination of k may be based on the technical specification, and/or configured, indicated, or scheduled by the base station 10. For example, "k = k_max" may be defined in the technical specification. One codeword may be mapped to one layer. That is, one-to-one CW-to-layer mapping may be performed.

In option 2), the maximum rank and the maximum number of codewords may be separately configured, and/or the scheduled or actual rank and the scheduled or actual number of codewords may be separately indicated.

According to the above-described operation 4), the mapping between the number of codewords and the number of layers applied to the multi-layer DFT-s-OFDM can be determined.

Hereinafter, "operation 5) mapping between the codewords and the layers for multi-layer DFT-s-OFDM" will be described.

When k codewords are mapped to Y layers for multi-layer DFT-s-OFDM, the mapping may be performed as described in the following 1) and 2).
1) When codewords are mapped to layers, mapping may be performed first for a codeword with a lower index. After the codeword with the lowest index reaches the maximum number of layers per codeword, the codeword with the subsequent index may be mapped to the remaining layers. Table 2 illustrates an example in which the maximum number of layers per codeword is 4.

**[Table 2]**

| **Number of layers (Y)** | **Number of codewords (k)** | **CW-to-layer mapping** |
|---|---|---|
| 1 | 1 | CW#0 ->Layer#0 |
| 2 | 1 | CW#0 ->Layer#0, 1 |
| | 2 | Not possible. |
| 3 | 1 | CW#0 ->Layer#0, 1, 2 |
| | 2 | Not possible. |
| | 3 | Not possible. |
| 4 | 1 | CW#0 ->Layer#0, 1, 2, 3 |
| | 2 | Not possible. |
| | 3 | Not possible. |
| | 4 | Not possible. |
| 5 | 1 | Not possible. |
| | 2 | CW#0 ->Layer#0, 1, 2, 3; CW#1->Layer#4 |
| | 3 | Not possible. |
| | 4 | Not possible. |
| | 5 | Not possible. |
| 6 | 1 | Not possible. |
| | 2 | CW#0 ->Layer#0, 1, 2, 3; CW#1->Layer#4, 5 |
| | 3 | Not possible. |
| | 4 | Not possible. |
| | 5 | Not possible. |
| | 6 | Not possible. |

For example, each codeword with index i (0 =< i < k - 1) may be mapped to layers from layer # (X * i) to layer # (X * i + X - 1). The last codeword with index # (k - 1) may be mapped to layers from layer # (X * k - X) to layer # (Y - 1).

X is the maximum number of layers per codeword. The value of X may be defined in the technical specification, and/or may be configured by the base station 10. The value of X may be equal to 4, may be less than 4, or may be greater than 4.

2) In order to cause the number of layers for each codeword to be equal to each other or substantially equal to each other, k codewords may be mapped to Y layers.

2A) The same codeword may be mapped to the consecutive layers. For example, the k0 codeword(s) with smaller index (k0 = mod(Y, k)) may be mapped to X1 = ceil(Y / k) layers. The (k - k0) codeword(s) with larger index (k0 = mod(Y, k)) may be mapped to X1 = floor(Y / k) layers.

Each codeword with index #i (0 =< i < k0) may be mapped to layers from layer #(X1 * i) to layer #(X1 * i + X1 - 1).

Each codeword with index #i (k0 =< i < k) may be mapped to layers from layer #(X1 * k0 + (i - k0) * X2) to layer #(X1 * k0 + (i - k0) * X2 + X2 - 1).

In addition, for example, k0 codeword(s) with larger index (k0 = mod(Y, k)) may be mapped to X1 = ceil(Y / k) layers. The (k - k0) codeword(s) with smaller index (k0 = mod(Y, k)) may be mapped to X1 = floor(Y / k) layers.

Each codeword with index #i (0 =< i < k - k0) may be mapped to layers from layer #(X2 * i) to layer #(X2 * i + X2 - 1).

Each codeword with index #i (k - k0 =< i < k) may be mapped to layers from layer #(X2 * (k - k0) + (i - k + k0) * X2) to layer #(X2 * (k - k0) + (i - k+k0)*X2+X2-1).

Table 3 illustrates an example of mapping according to 2A).

**[Table 3]**

| **Number of layers (Y)** | **Number of codewords (k)** | **CW-to-layer mapping** |
|---|---|---|
| 1 | 1 | CW#0 ->Layer#0 |
| 2 | 1 | CW#0 ->Layer#0, 1 |
| | 2 | CW#0->Layer#0; CW#1->Layer#1 |
| 3 | 1 | CW#0 ->Layer#0, 1, 2 |
| | 2 | CW#0->Layer#0, 1; CW#1->Layer#2 |
| | 3 | CW#0->Layer#0; CW#1->Layer#1; CW#2->Layer#2 |
| 4 | 1 | CW#0 ->Layer#0, 1, 2, 3 |
| | 2 | CW#0->Layer#0, 1; CW#1->Layer#2, 3 |
| | 3 | CW#0->Layer#0, 1; CW#1->Layer#2; CW#2>Layer#3 |
| | 4 | CW#0->Layer#0; CW#1->Layer#1; CW#2->Layer#2; CW#3->Layer#3 |
| 5 | 1 | CW#0 ->Layer#0, 1, 2, 3, 4 |
| | 2 | CW#0->Layer#0, 1, 2; CW#1->Layer#3, 4 |
| | 3 | CW#0->Layer#0, 1; CW#1->Layer#2, 3; CW#2>Layer#4 |
| | 4 | CW#0->Layer#0, 1; CW#1->Layer#2; CW#2->Layer#3; CW#3->Layer#4 |
| | 5 | CW#0->Layer#0; CW#1->Layer#1; CW#2->Layer#2; CW#3->Layer#3; CW#4->Layer#4 |
| 6 | 1 | CW#0 ->Layer#0, 1, 2, 3, 4, 5 |
| | 2 | CW#0->Layer#0, 1, 2; CW#1->Layer#3, 4, 5 |
| | 3 | CW#0->Layer#0, 1; CW#1->Layer#2, 3; CW#2>Layer#4, 5 |
| | 4 | CW#0->Layer#0, 1; CW#1->Layer#2, 3; CW#2->Layer#4; CW#3->Layer#5 |
| | 5 | CW#0->Layer#0, 1; CW#1->Layer#2; CW#2->Layer#3; CW#3->Layer#4; CW#4->Layer#5 |
| | 6 | CW#0->Layer#0; CW#1->Layer#1; CW#2->Layer#2; CW#3->Layer#3; CW#4->Layer#4; CW#5->Layer#5 |

2B) The k codewords may be cyclically mapped to Y layers. For example, a codeword with index #i may be mapped to layers # (i + N * k), where N = 0, 1, 2, ..., ceil(Y/k) and i + N * k < Y. Table 4 illustrates an example of mapping according to 2B).

**[Table 4]**

| **Number of layers (Y)** | **Number of codewords (k)** | **CW-to-layer mapping** |
|---|---|---|
| 1 | 1 | CW#0 ->Layer#0 |
| 2 | 1 | CW#0 ->Layer#0,1 |
| | 2 | CW#0->Layer#0; CW#1->Layer#1 |
| 3 | 1 | CW#0 ->Layer#0, 1, 2 |
| | 2 | CW#0->Layer#0, 2; CW#1->Layer#1 |
| | 3 | CW#0->Layer#0; CW#1->Layer#1; CW#2->Layer#2 |
| 4 | 1 | CW#0 ->Layer#0, 1, 2, 3 |
| | 2 | CW#0->Layer#0, 2; CW#1->Layer#1, 3 |
| | 3 | CW#0->Layer#0, 3; CW#1->Layer#1; CW#2>Layer#2 |
| | 4 | CW#0->Layer#0; CW#1->Layer#1; CW#2->Layer#2; CW#3->Layer#3 |
| 5 | 1 | CW#0 ->Layer#0, 1, 2, 3, 4 |
| | 2 | CW#0->Layer#0, 2, 4; CW#1->Layer#1, 3 |
| | 3 | CW#0->Layer#0, 3; CW#1->Layer#1, 4; CW#2>Layer#2 |
| | 4 | CW#0->Layer#0, 4; CW#1->Layer#1; CW#2->Layer#2; CW#3->Layer#3 |
| | 5 | CW#0->Layer#0; CW#1->Layer#1; CW#2->Layer#2; CW#3->Layer#3; CW#4->Layer#4 |
| 6 | 1 | CW#0 ->Layer#0, 1, 2, 3, 4, 5 |
| | 2 | CW#0->Layer#0, 2, 4; CW#1->Layer#1, 3, 5 |
| | 3 | CW#0->Layer#0, 3; CW#1->Layer#1, 4; CW#2>Layer#2, 5 |
| | 4 | CW#0->Layer#0, 4; CW#1->Layer#1, 5; CW#2->Layer#2; CW#3->Layer#3 |
| | 5 | CW#0->Layer#0, 5; CW#1->Layer#1; CW#2->Layer#2; CW#3->Layer#3; CW#4->Layer#4 |
| | 6 | CW#0->Layer#0; CW#1->Layer#1; CW#2->Layer#2; CW#3->Layer#3; CW#4->Layer#4; CW#5->Layer#5 |

It is to be noted that k is the number of codewords, and may be determined according to option 1) or option 2) in operation 4. The above-described 1) may be applied to option 1) in operation 4, and the above-described 2) may be applied to option 1) and option 2) in operation 4.

Operation 4) and operation 5) may be applicable for DFT-s-OFDM PUSCH and/or DFT-s-OFDM PDSCH. Operation 4) and operation 5) may be applicable for CP-OFDM PUSCH and/or CP-OFDM PDSCH. Operation 4) and operation 5) may be applicable for PUSCH and/or PDSCH with other waveforms. The other waveforms may be other waveforms of low PAPR modulation method, for example, APSK (Amplitude and phase-shift keying), alpha*phi-BPSK (Binary phase-shift keying).

According to the above-described operation 5), the codeword-to-layer mapping can be performed for multi-layer DFT-s-OFDM.

Hereinafter, "operation 6) the precoders and codebooks for multi-layer DFT-s-OFDM PUSCH/PDSCH" will be described.

Operation 6-1) UL precoders and codebooks for DFT-s-OFDM PUSCH with rank being greater than 1 will be described below.

Separate, different, or new UL and DL precoders, codebooks, or precoding matrices may be implemented or supported for DFT-s-OFDM PUSCH or PDSCH with rank being greater than 1.

Non-coherent, partial-coherent, and/or fully-coherent codebooks may be supported for DFT-s-OFDM PUSCH UL codebooks. The coherent types of precoders supported or defined for DFT-s-OFDM PUSCH may be different for different ranks.

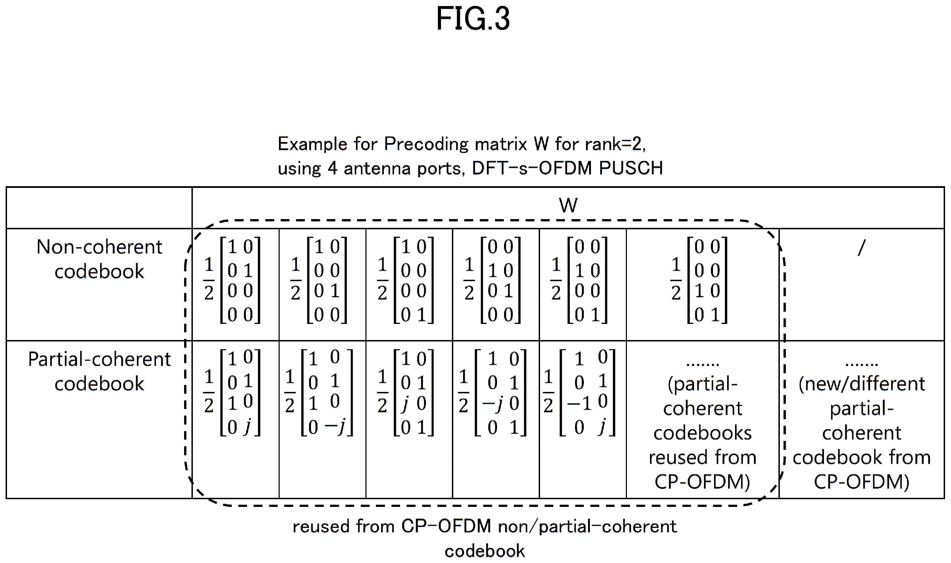

Fig. 3 is a drawing for describing an example of a codebook in an embodiment of the present invention. As illustrated in Fig. 3, all of the noncoherent codebooks or precoding matrices for CP-OFDM may be reused for DFT-s-OFDM PUSCH with rank being greater than 1.

In addition, as illustrated in Fig. 3, all of or a part of the partial-coherent codebooks or precoding matrices for CP-OFDM may be reused or applied for DFT-s-OFDM PUSCH with rank being greater than 1. For example, partial-coherent codebooks in which each row includes only one non-zero element may be reused for DFT-s-OFDM. Different or new partial-coherent codebooks or precoding matrices (with low PAPR property) may be implemented or supported for DFT-s-OFDM PUSCH with rank being greater than 1.

All of or a part of the fully-coherent codebooks or precoding matrices for CP-OFDM with corresponding rank may be reused or applied for DFT-s-OFDM PUSCH with rank being greater than 1. Different or new fully-coherent codebooks or precoding matrices (with low PAPR property) may be implemented or supported for DFT-s-OFDM PUSCH with rank being greater than 1.

DFT-s-OFDM with rank being greater than 1 may be or may not be supported or used in a case where ul-FullPowerTransmission (refer to Non-Patent Literatures 3 and 4) is fullpowerMode1, fullpowerMode2, fullpower, or not configurred.

Restrictions or principles may be applicable for UL codebooks for multi-layer DFT-s-OFDM. For example, in order to ensure low PAPR, one layer may be mapped to one antenna port, or mapping from multiple layers to one antenna port is not required to be supported. In addition, with respect to the precoding matrices for DFT-s-OFDM, only one non-zero element may be present for each row.

Operation 6-2) DL codebooks for DFT-s-OFDM PDSCH with rank being greater than 1 may be as described below.

New DL codebooks (for example, with low PAPR property) may be implemented or supported for DFT-s-OFDM. A part of predetermined codebook type or mode of codebooks for CP-OFDM with corresponding rank may be reusable or applicable for DFT-s-OFDM.

For example, current DL codebooks support only fully-coherent precoders. A new non-coherent and/or partial-coherent precoder may be implemented for a new waveform of DFT-s-OFDM. For example, a UL noncoherent and/or partial-coherent precoder may be reused.

Restrictions or principles may be applicable for DL codebooks for multi-layer DFT-s-OFDM. For example, in order to ensure low PAPR, one layer may be mapped to one antenna port, or mapping from multiple layers to one antenna port is not required to be supported. In addition, with respect to the precoding matrices for DFT-s-OFDM, only one non-zero element may be present for each row.

According to the above-described operation 6), precoding can be applied for multi-layer DFT-s-OFDM.

Hereinafter, "operation 7) indication related to the precoding information and the number of layers for multi-layer DFT-s-OFDM PUSCH/PDSCH" will be described. The indication may be performed as described in the following 1) or 2).

1) Tables in which UL precoding matrices or codebooks are separated (hereinafter, referred to as "W table") for DFT-s-OFDM PUSCH and CP-OFDM PUSCH for each of the ranks greater than 1 may be defined.

1-1) The number of precoding matrices or codebooks in the W table for DFT-s-OFDM PUSCH with the rank greater than 1 may be equal to the number of precoding matrices or codebooks in the W table for CP-OFDM PUSCH with the rank greater than 1. The table of TMPI indexes and the number of layers for CP-OFDM PUSCH (hereinafter, referred to as "TPMI table") may be reused for DFT-s-OFDM PUSCH. Table 5 illustrates an example of the W table for DFT-s-OFDM PUSCH and CP-OFDM PUSCH in 1-1). Table 6 illustrates an example of the TPMI table in 1-1).

**[Table 5]**

| **TPMI** index | W | | | |
|---|---|---|---|---|
| | Ordered from left to right in increasing order of TPMI index | | | |
| 0-7 | $\frac{1}{2} \left[\begin{matrix}1 & 0 \\ 0 & 1 \\ 0 & 0 \\ 0 & 0\end{matrix}\right]$ | ...... | ...... | ...... |
| 8-15 | ...... | ...... | ...... | ...... |
| 16-21 | ...... | ...... | | |

| Bit field mapped to index | codebookSubset = fullyAndPartialAnd NonCoherent | Bit field mapped to index | codebookSubset = partialAndNon Coherent | Bit field mapped to index | codebookSubset= nonCoherent |
|---|---|---|---|---|---|
| 0 | 1 layer: TPMI=0 | 0 | 1 layer: TPMI=0 | 0 | 1 layer: **TPMI=0** |
| 1 | 1 layer: TPMI=1 | 1 | 1 layer: TPMI=1 | 1 | 1 layer: TPMI=1 |
| ... | ... | ... | ... | ... | ... |
| 3 | 1 layer: TPMI=3 | 3 | 1 layer: TPMI=3 | 3 | 1 layer: TPMI=3 |
| 4 | 2 layers: TPMI=0 | 4 | 2 layers: TPMI=0 | 4 | 2 layers: TPMI=0 |
| ... | ... | ... | ... | ... | ... |
| 9 | 2 layers: TPMI=5 | 9 | 2 layers: TPMI=5 | 9 | 2 layers: TPMI=5 |
| 10 | 3 layers: TPMI=0 | 10 | 3 layers: TPMI=0 | 10 | 3 layers: TPMI=0 |
| 11 | 4 layers: TPMI=0 | 11 | 4 layers: TPMI=0 | 11 | 4 layers: TPMI=0 |
| 12 | 1 layer: TPMI=4 | 12 | 1 layer: TPMI=4 | 12-15 | reserved |
| ... | ... | ... | ... | | |
| ... | ... | | | | |
| 62-63 | reserved | | | | |

For example, in a case where codebookSubset is nonCoherent, when index 9 is indicated by DCI, the UE selects a precoding matrix with two layers and TPMI=5 from W table illustrated in Table 5, based on Table 6.

1-2) The number of precoding matrices or codebooks in the W table for DFT-s-OFDM PUSCH with the rank greater than 1 may be either less than or greater than the number of precoding matrices or codebooks in the W table for CP-OFDM PUSCH with the rank greater than 1. A TPMI table separated or different from the TPMI table for CP-OFDM PUSCH may be supported or implemented for DFT-s-OFDM PUSCH with the rank greater than 1.

In a case where a fully-coherent codebook or precoder is not supported for DFT-s-OFDM PUSCH with the rank greater than 1, the TPMI table for DFT-s-OFDM PUSCH is not required to include a case of codebookSubset being equal to fullyAndPartialAndNonCoherent. In a case where a fully-coherent and partial-coherent codebook or precoder is not supported for DFT-s-OFDM PUSCH with the rank greater than 1, the TPMI table for DFT-s-OFDM PUSCH may include only a case of codebookSubset being equal to NonCoherent.

The number of UL precoding matrices or codebooks for DFT-s-OFDM PUSCH with the rank being not less than maxRank may be either less than or greater than the number for CP-OFDM PUSCH. The size of a field for "precoding information and number of layers" in scheduling DFT-s-OFDM PUSCH may be either less than or greater than the size of a field in DCI scheduling CP-OFDM PUSCH with corresponding maxRank.

Table 7 illustrates an example of W table for DFT-s-OFDM PUSCH in 1-2) and Table 5 illustrates an example of W table for CP-OFDM PUSCH. Table 8 illustrates an example of TPMI table for DFT-s-OFDM PUSCH in 1-2). Table 9 illustrates an example of TPMI table for CP-OFDM PUSCH in 1-2).

**[Table 7]**

| TPMI index | W | | | |
|---|---|---|---|---|
| | Ordered from left to right in increasing order of TPMI index | | | |
| 0-7 | $\frac{1}{2} \left[\begin{matrix}1 & 0 \\ 0 & 1 \\ 0 & 0 \\ 0 & 0\end{matrix}\right]$ | ...... | ...... | ...... |
| 8-15 | ...... | ...... | ...... | ...... |

**[Table 8]**

| Bit field mapped to index | codebookSubset = partialAndNon Coherent | Bit field mapped to index | codebookSubset= nonCoherent |
|---|---|---|---|
| 0 | 1 layer: TPMI=0 | 0 | 1 layer: TPMI=0 |
| 1 | 1 layer: TPMI=1 | 1 | 1 layer: TPMI=1 |
| ... | ... | ... | ... |
| 3 | 1 layer: TPMI=3 | 3 | 1 layer: TPMI=6 |
| 4 | 2 layers: TPMI=0 | 4 | 2 layers: TPMI=0 |
| ... | ... | ... | ... |
| 9 | 2 layers: TPMI=5 | 9 | 2 layers: TPMI=5 |
| ... | ... | | |
| 30-31 | | | |

**[Table 9]**

| Bit field mapped to index | codebookSubset = fullyAndPartialAnd NonCoherent | Bit field mapped to index | codebookSubset = partialAndNon Coherent | Bit field mapped to index | codebookSubset= nonCoherent |
|---|---|---|---|---|---|
| 0 | 1 layer: TPMI=0 | 0 | 1 layer: TPMI=0 | 0 | 1 layer: TPMI=0 |
| 1 | 1 layer: TPMI=1 | 1 | 1 layer: TPMI=1 | 1 | 1 layer: TPMI=1 |
| ... | ... | ... | ... | ... | ... |
| 3 | 1 layer: TPMI=3 | 3 | 1 layer: TPMI=3 | 3 | 1 layer: TPMI=6 |
| 4 | 2 layers: TPMI=0 | 4 | 2 layers: TPMI=0 | 4 | 2 layers: TPMI=0 |
| ... | ... | ... | ... | ... | ... |
| ... | ... | ... | ... | | |
| 62-63 | reserved | | | | |

For example, in a case where DFT-s-OFDM PUSCH is scheduled, when an index is indicated by DCI, the UE selects the corresponding precoding matrix from W table illustrated in Table 7, based on Table 8. For example, in a case where CP-OFDM PUSCH is scheduled, when an index is indicated by DCI, the UE selects the corresponding precoding matrix from W table illustrated in Table 5, based on Table 9.

2) A common W table may be used for DFT-s-OFDM and CP-OFDM PUSCH for each of the rank being greater than 1. For example, in the W table, some precoding matrices or codebooks may be applicable for both DFT-s-OFDM and CP-OFDM, or a part of precoding matrices or codebooks may be applicable for only one of DFT-s-OFDM and CP-OFDM. In addition, a different or new precoding matrix or codebook may be implemented in W table for DFT-s-OFDM.

2-1) For the sake of TPMI and rank indication, the same TPMI table may be used for CP-OFDM and DFT-s-OFDM for a predetermined or the same maxRank. The UE may always expect that the precoding matrices or codebooks associated with the indicated TPMI index and the number of ranks are to be applicable for the scheduled PUSCH waveform type. For example, in a case where DFT-s-OFDM PUSCH is scheduled by DCI, the UE may expect that the indicated rank and the precoding matrix or codebook are to be applicable for DFT-s-OFDM PUSCH. For example, in a case where CP-OFDM PUSCH is scheduled by DCI, the UE may expect that the indicated rank and the precoding matrix or codebook are to be applicable for CP-OFDM PUSCH.

2-2) For the sake of TPMI and rank indication, a separate or different TPMI table may be used for CP-OFDM and DFT-s-OFDM for a predetermined or the same maxRank. With respect to the TPMI table for DFT-s-OFDM, only the TPMI index corresponding to the precoding matrix or codebook applicable for DFT-s-OFDM may be indicated or may be included. With respect to the TPMI table for CP-OFDM, only the TPMI index corresponding to the precoding matrix or codebook applicable for CP-OFDM may be indicated or may be included.

The size of a field for "precoding information and number of layers" in DCI scheduling DFT-s-OFDM PUSCH may be dependent on the new or separated TPMI table for DFT-s-OFDM, or the field size may be smaller than a case of scheduling CP-OFDM PUSCH.

In a case where a fully-coherent codebook or precoder is not supported for DFT-s-OFDM PUSCH with the rank greater than 1, the TPMI table for DFT-s-OFDM PUSCH is not required to include a case of codebookSubset being equal to fullyAndPartialAndNonCoherent. In a case where a fully-coherent and partial-coherent codebook or precoder is not supported for DFT-s-OFDM PUSCH with the rank greater than 1, the TPMI table for DFT-s-OFDM PUSCH may include only a case of codebookSubset being equal to NonCoherent.

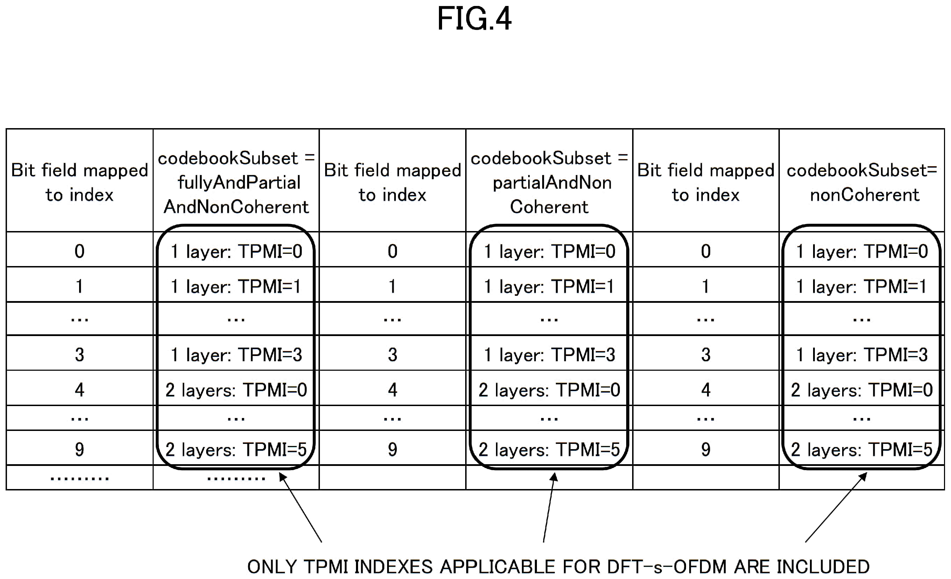

Table 10 illustrates an example of a common W table for DFT-s-OFDM PUSCH and CP-OFDM PUSCH in 2-2). Table 11 illustrates an example of TPMI table for DFT-s-OFDM PUSCH in 2-2). Fig. 4 illustrates an example of TPMI table for DFT-s-OFDM PUSCH in 2-2).

**[Table 10]**

| TPMI index | W | | | | | | | |
|---|---|---|---|---|---|---|---|---|
| | Ordered from left to right in increasing order of TPMI index | | | | | | | |
| 0-7 | * | * | ...... .. * | * | ...... * | * | ...... * | * |
| 8-15 | ...... * | | ...... | | ...... * | | ...... | |
| 16-23 | ...... * | | ...... | | ...... | | ...... | |
| 24-27 | ...... * | | ...... | | | | | |

**[Table 11]**

| Bit field mapped to index | codebookSubset = fullyAndPartialAnd NonCoherent | Bit field mapped to index | codebookSubset = partialAndNonCoherent | Bit field mapped to index | codebookSubset= nonCoherent |
|---|---|---|---|---|---|
| 0 | 1 layer: TPMI=0 | 0 | 1 layer: TPMI=0 | 0 | 1 layer: TPMI=0 |
| 1 | 1 layer: TPMI=1 | 1 | 1 layer: TPMI=1 | 1 | 1 layer: TPMI=1 |
| ... | ... | ... | ... | ... | ... |
| 3 | 1 layer: TPMI=3 | 3 | 1 layer: TPMI=3 | 3 | 1 layer: TPMI=3 |
| 4 | 2 layers: TPMI=0 | 4 | 2 layers: TPMI=0 | 4 | 2 layers: TPMI=0 |
| ... | ... | ... | ... | ... | ... |
| 9 | 2 layers: TPMI=5 | 9 | 2 layers: TPMI=5 | 9 | 2 layers: TPMI=5 |
| ......... | ......... | | | | |

From among the precoding matrices illustrated in Table 10, the precoding matrices with * may be applied for DFT-s-OFDM PUSCH. As illustrated in Table 11, in a case where the scheduled PUSCH is a DFT-s-OFDM PUSCH, the UE does not need to expect that the indicated TPMI index is not applicable for DFT-s-OFDM. As illustrated in Fig. 4, in a case where the TPMI table is for DFT-s-OFDM, the UE may expect that the TPMI table includes only TPMI indexes applicable for DFT-s-OFDM.

According to the above-described operation 7), in the multi-layer DFT-s-OFDM, the precoding matrix and the number of layers applied to the scheduled DFT-s-OFDM PUSCH can be determined.

Hereinafter, "operation 8) indication related to the DMRS antenna ports for multi-layer DFT-s-OFDM PUSCH/PDSCH" will be described.

Operation 8-1) The legacy NR DMRS configuration type may be reused for the multi-layer DFT-s-OFDM PUSCH. DMRS configuration type 1 may be supported for DFT-s-OFDM with the rank being greater than 1.

Separate or different tables for antenna ports may be supported or implemented for DFT-s-OFDM PUSCH with maxRank being greater than 1. With respect to the tables for each antenna port for DFT-s-OFDM, the number of DMRS CDM groups without data may be equal to the number of total DMRS CDM groups supported for the DMRS configuration type. For example, the number of DMRS CDM groups without data for the DMRS configuration type 1 may be 2.

In a case where a new antenna port table is implemented for DFT-s-OFDM with the rank being greater than 1, the new table may be used for interpretation of the antenna field included in the UL grant DCI scheduling DFT-s-OFDM PUSCH. The size of a field for DFT-s-OFDM with the rank being greater than 1 may be equal to, may be less than, or may be greater than, the size of a field for CP-OFDM with the rank being greater than 1.

Table 12, Table 13, and Table 14 illustrate examples of the antenna port table.

**[Table 12]**

| Value | Number of DMRS CDM group(s) without data | DMRS port(s) |
|---|---|---|
| 0 | 2 | 0, 1 |
| 1 | 2 | 2, 3 |
| 2 | 2 | 0, 2 |
| ...... | ...... | ...... |
| ...... | Reserved | Reserved |

**[Table 13]**

| Value | Number of DMRS CDM group(s) without data | DMRS port(s) |
|---|---|---|
| 0 | 2 | 0, 1, 2 |
| 1 | 2 | 1, 2, 3 |
| 2 | 2 | 0, 1, 3 |
| ...... | ...... | ...... |
| ...... | Reserved | Reserved |

**[Table 14]**

| Value | Number of DMRS CDM group(s) without data | DMRS port(s) | Number of front-load symbols |
|---|---|---|---|
| 0 | 2 | 0, 1 | 1 |
| 1 | 2 | 2, 3 | 1 |
| 2 | 2 | 0, 2 | 1 |
| 3 | 2 | 1, 3 | 1 |
| 4 | 2 | 0, 1 | 2 |
| 5 | 2 | 2, 3 | 2 |
| 6 | 2 | 4, 5 | 2 |
| 7 | 2 | 6, 7 | 2 |
| ...... | 2 | ...... | 2 |

Table 12 is an example for DFT-s-OFDM in which dmrs-Type = 1, maxLength = 1, and rank = 2. Table 13 is an example for DFT-s-OFDM in which dmrs-Type = 1, maxLength = 1, and rank = 3. Table 14 is an example for DFT-s-OFDM in which dmrs-Type = 1, maxLength = 2, and rank = 2.

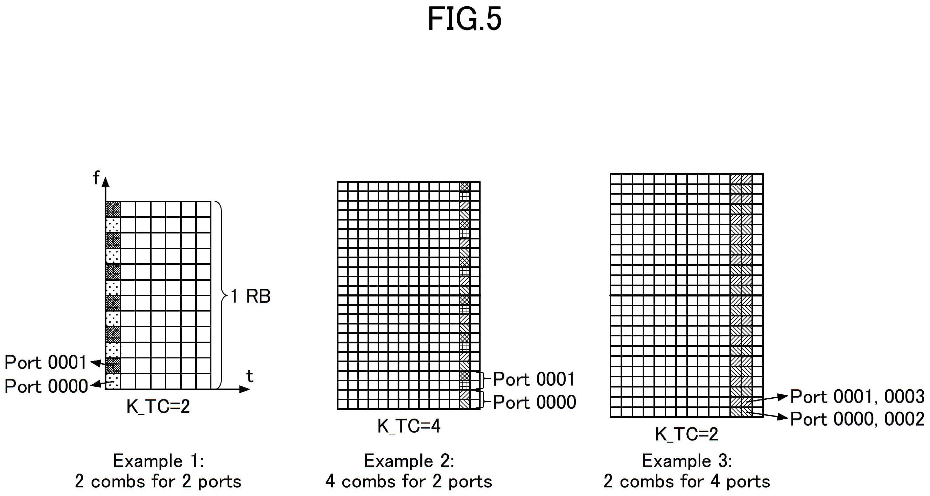

Fig. 5 is a drawing for describing an example of DMRS in an embodiment of the present invention. As illustrated in Fig. 5, the DMRS transmission with a comb structure at the subcarrier or RB level for DFT-s-OFDM PUSCH may be implemented.

The transmission comb parameter K_TC may be configured by the gNB, may be indicated, or may be defined in the technical specification. The frequency domain DMRS density can be flexibly configured by using the comb parameter. For example, the low DMRS density with coarser comb may be useful for a case of non-frequency selective channel environment.

The candidate values for K_TC may be defined in the technical specification. For example, the candidate values for K_TC may be 2, 4, 6, 8, 12, 16, 24, etc. K_TC may be determined based on the indicated number of antenna ports. As illustrated in Example 1 in Fig. 5, K_TC may be the number of antenna ports. In other words, one comb may occupy one antenna port. In addition, as illustrated in Example 2 in Fig. 5, K_TC may be M times the number of antenna ports. In other words, one antenna port may be mapped to M combs. In addition, as illustrated in Example 3 in Fig. 5, K_TC may be a value obtained by dividing the number of antenna ports by N. In other words, one comb may be mapped to N antenna ports.

Indication of the DMRS antenna port field may be indicated based on the K_TC parameter, and/or the DMRS symbol location parameter, and/or the DMRS antenna port locations among the antenna ports mapped by the comb.

Operation 8-1) The legacy NR DMRS configuration type may be reused for the multi-layer DFT-s-OFDM PDSCH. DMRS configuration type 1 may be supported for DFT-s-OFDM with the rank being greater than 1.

Separate or different tables for antenna ports may be supported or implemented for DFT-s-OFDM PDSCH with maxRank being greater than 1. With respect to the tables for each antenna port for DFT-s-OFDM, the number of DMRS CDM groups without data may be equal to the number of total DMRS CDM groups supported for the DMRS configuration type. For example, the number of DMRS CDM groups without data for the DMRS configuration type 1 may be 2.

In a case where a new antenna port table is implemented for DFT-s-OFDM with the rank being greater than 1, the new table may be used for interpretation of the antenna field included in the DL grant DCI scheduling DFT-s-OFDM PDSCH. The size of a field for DFT-s-OFDM with the rank being greater than 1 may be equal to, may be less than, or may be greater than, the size of a field for CP-OFDM with the rank being greater than 1.

Table 15 and Table 16 illustrate examples of the antenna port table.

**[Table 15]**

| One Codeword: | | |
|---|---|---|
| Codeword 0 enabled, | | |
| Codeword 1 disabled | | |
| Value | Number of DMRS CDM group(s) without data | DMRS port(s) |
| 0 | 2 | 0 |
| 1 | 2 | 1 |
| 2 | 2 | 2 |
| 3 | 2 | 3 |
| 4 | 2 | 0, 1 |
| 5 | 2 | 2, 3 |
| 6 | 2 | 0, 2 |
| 7 | 2 | 0-2 |
| 8 | 2 | 0-3 |
| 9 | 2 | ...... |
| ...... | 2 | ...... |
| ...... | 2 | ...... |
| ...... | Reserved | Reserved |

**[Table 16]**

| Two Codewords: | | | |
|---|---|---|---|
| Codeword 0 enabled, | | | |
| Codeword 1 enabled | | | |
| Value | Number of DMRS CDM group(s) without data | DMRS port(s) | Number of front-load symbols |
| 0 | 2 | 0-4 | 2 |
| 1 | 2 | 0, 1, 2, 3, 4, 6 | 2 |
| 2 | 2 | 0, 1, 2, 3, 4, 5, 6 | 2 |
| 3 | 2 | 0, 1, 2, 3, 4, 5, 6, 7 | 2 |
| 4-31 | reserved | reserved | reserved |

Table 15 is an example for DFT-s-OFDM in which dmrs-Type = 1 and maxLength = 1. Table 16 is an example for DFT-s-OFDM in which dmrs-Type = 1 and maxLength = 2.

Fig. 5 is a drawing for describing an example of DMRS in an embodiment of the present invention. As illustrated in Fig. 5, the DMRS transmission with a comb structure at the subcarrier or RB level for DFT-s-OFDM PDSCH may be implemented.

The transmission comb parameter K_TC may be configured by the gNB, may be indicated, or may be defined in the technical specification.

The candidate values for K_TC may be defined in the technical specification. For example, the candidate values for K_TC may be 2, 4, 6, 8, 12, 16, etc. K_TC may be determined based on the indicated number of antenna ports. As illustrated in Example 1 in Fig. 5, K_TC may be the number of antenna ports. In other words, one comb may occupy one antenna port. In addition, as illustrated in Example 2 in Fig. 5, K_TC may be M times the number of antenna ports. In other words, one antenna port may be mapped to M combs. In addition, as illustrated in Example 3 in Fig. 5, K_TC may be a value obtained by dividing the number of antenna ports by N. In other words, one comb may be mapped to N antenna ports.

Indication of the DMRS antenna port field may be indicated based on the K_TC parameter, and/or the DMRS symbol location parameter, and/or the DMRS antenna port locations among the antenna ports mapped by the comb.

Hereinafter, the "operation 9) PTRS for multi-layer DFT-s-OFDM PUSCH/PDSCH" will be described.

Operation 9-1) The time and frequency domain resources of PTRS for DFT-s-OFDM PUSCH with the rank being greater than 1 may be determined as described in the following 1) or 2).
1) A legacy rule may be reused for DFT-s-OFDM PUSCH with the rank being greater than 1.
2) A new, separate, or different table for DFT-s-OFDM PUSCH with the rank being greater than 1 indicating the relationship between the PTRS group pattern and the scheduled subband-width may be implemented or supported. The number of PTRS groups and/or the number of samples for PTRS group may depend on the number of layers, or rank.

With respect to the PTRS ports, the supported or configured maximum number of PTRS ports scheduled for DFT-s-OFDM PUSCH with the rank being greater than 1 may be 1 or 2. With respect to the PTRS-DMRS antenna port association for DFT-s-OFDM PUSCH with the rank being greater than 1, the legacy rule for CP-OFDM with the rank being greater than 1 may be reused, or a new, separate, or different table for DMRS-PTRS antenna port mapping or association may be implemented for supported.

Operation 9-2) The time and frequency domain resources of PTRS for DFT-s-OFDM PDSCH with the rank being greater than 1 may be determined as described in the following 1) or 2).
1) A legacy rule may be reused for DFT-s-OFDM PDSCH with the rank being greater than 1.
2) A new, separate, or different table for DFT-s-OFDM PDSCH with the rank being greater than 1 indicating the relationship between the PTRS group pattern and the scheduled subband-width may be implemented or supported. The number of PTRS groups and/or the number of samples for PTRS group may depend on the number of layers, or rank.

With respect to the PTRS ports, the supported or configured maximum number of PTRS ports scheduled for DFT-s-OFDM PDSCH with the rank being greater than 1 may be 1 or 2. With respect to the PTRS-DMRS antenna port association for DFT-s-OFDM PDSCH with the rank being greater than 1, the legacy rule for CP-OFDM with the rank being greater than 1 may be reused, or a new, separate, or different table for DMRS-PTRS antenna port mapping or association may be implemented for supported.

The following UE capabilities may be defined for each UE, each FR, each FC, etc., and may be reported from the UE to the base station 10.

- Whether or not to support DFT-s-OFDM PUSCH with the rank being greater than 1
- Whether or not to support DFT-s-OFDM PDSCH with the rank being greater than 1
- The maximum number of layers supported for DFT-s-OFDM PUSCH
- The maximum number of layers supported for DFT-s-OFDM PDSCH
- Whether or not to support transmission of two codewords for DFT-s-OFDM PUSCH
- The maximum number of codewords supported for DFT-s-OFDM PUSCH
- Whether or not to support transmission of two codewords for DFT-s-OFDM PDSCH
- The maximum number of codewords supported for DFT-s-OFDM PDSCH
- Whether or not to support fully-coherent, partial-coherent, or non-coherent codebooks for DFT-s-OFDM PUSCH with the rank being greater than 1

- Whether or not to support fully-coherent, partial-coherent, or non-coherent codebooks for DFT-s-OFDM PDSCH with the rank being greater than 1
- Whether or not to support comb-based DMRS for DFT-s-OFDM PUSCH or PDSCH
- Whether or not to support two PTRS ports for DFT-s-OFDM PUSCH
- The maximum number of PTRS ports supported for DFT-s-OFDM PUSCH

According to the above-described embodiments, multi-layer DFT-s-OFDM PUSCH or multi-layer DFT-s-OFDM PDSCH can be transmitted and received.

In other words, waveforms and transmission methods can be controlled in the wireless communication system.

### (Device configuration)

Next, a functional configuration example of the base station 10 and the terminal 20 for performing the processes and operations described above will be described. The base station 10 and the terminal 20 include functions for implementing the embodiments described above. It should be noted, however, that each of the base stations 10 and the terminal 20 may include only some of the functions in an embodiment.

### <Base station 10>

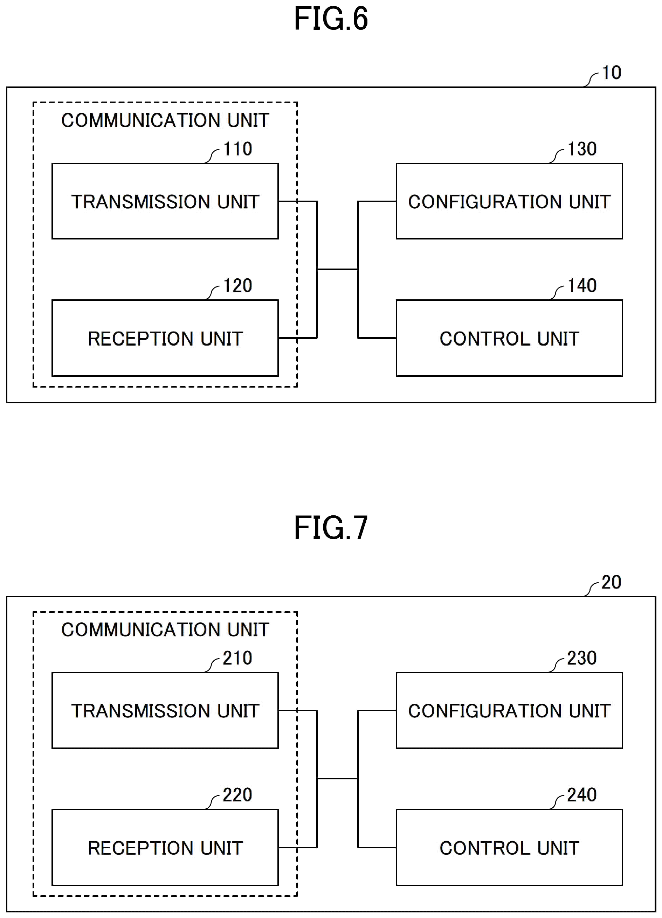

Fig. 6 is a drawing illustrating an example of a functional structure of a base station 10 according to an embodiment of the present invention. As shown in Fig. 6, the base station 10 includes a transmission unit 110, a reception unit 120, a configuration unit 130, and a control unit 140. The functional configuration illustrated in Fig. 6 is merely an example. Functional divisions and names of functional units may be anything as long as operations according to an embodiment of the present invention can be performed.

The transmission unit 110 includes a function for generating a signal to be transmitted to the terminal 20 side and transmitting the signal wirelessly. Further, the transmission unit 110 transmits an inter-network-node message to another network node. The reception unit 120 includes a function for receiving various signals transmitted from the terminal 20 and acquiring, for example, information of a higher layer from the received signals. In addition, the transmission unit 110 has a function of transmitting NR-PSS, NR-SSS, NR-PBCH, DL/UL control signals, and the like to the terminal 20. Further, the reception unit 120 receives an inter-network-node message from another network node.

The configuration unit 130 stores preset information and various configuration information items to be transmitted to the terminal 20. Contents of the configuration information are, for example, information related to the configuration of waveforms and transmission methods.

The control unit 140 performs control related to the configuration of waveforms and transmission methods as described in an embodiment of the present invention. In addition, the control unit 140 performs scheduling. The functional units related to signal transmission in the control unit 140 may be included in the transmission unit 110, and the functional units related to signal reception in the control unit 140 may be included in the reception unit 120.

### <Terminal 20>

Fig. 7 is a drawing illustrating an example of a functional structure of a terminal 20 according to an embodiment of the present invention. As shown in Fig. 7, the terminal 20 includes a transmission unit 210, a reception unit 220, a configuration unit 230, and a control unit 240. The functional configuration illustrated in Fig. 7 is merely an example. Functional divisions and names of functional units may be anything as long as operations according to an embodiment of the present invention can be performed.

The transmission unit 210 generates a transmission signal from transmission data and transmits the transmission signal wirelessly. The reception unit 220 receives various signals wirelessly and obtains higher layer signals from the received physical layer signals. In addition, the reception unit 220 has a function of receiving NR-PSS, NR-SSS, NR-PBCH, DL/UL/SL control signals, and the like, transmitted from the base station 10. In addition, for example, with respect to the D2D communications, the transmission unit 210 transmits, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 220 receives, from the another terminal 20, PSCCH, PSSCH, PSDCH, PSBCH, etc.

The configuration unit 230 stores various configuration information items received by the reception unit 220 from the base station 10. In addition, the configuration unit 230 also stores pre-configured configuration information. Contents of the configuration information are, for example, information related to the configuration of waveforms and transmission methods.

The control unit 240 performs control related to the configuration of waveforms and transmission methods as described in an embodiment of the present invention. The functional units related to signal transmission in the control unit 240 may be included in the transmission unit 210, and the functional units related to signal reception in the control unit 240 may be included in the reception unit 220.

### (Hardware structure)

The block diagrams that have been used to describe the above embodiments (Fig. 6 and Fig. 7) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, the functional block (component) to implement a function of transmission may be referred to as a transmitting unit or a transmitter. The method for implementing each component is not particularly limited as described above.

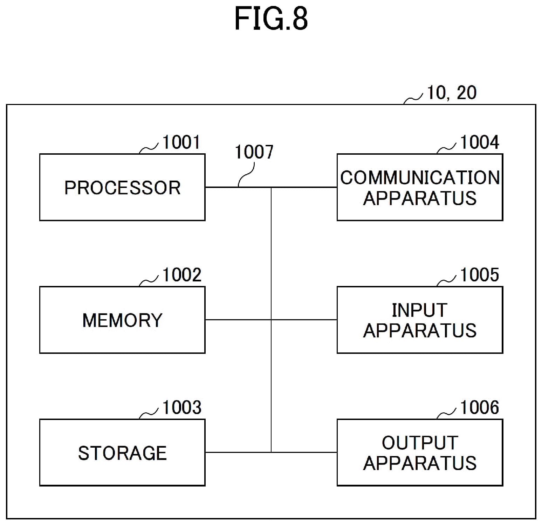

For example, the base station 10, the terminal 20, etc., according to an embodiment of the present disclosure may function as a computer for processing the radio communication method of the present disclosure. Fig. 8 is a diagram to show an example of a hardware structure of the base station 10 and the terminal 20 according to one embodiment. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 6 may be implemented by control programs that are stored in the memory 1002 and that operate on the processor 1001. In addition, for example, the control unit 240 of the terminal 20 illustrated in Fig. 7 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that outputs something to the outside (for example, a display, a speaker, an LED lamp). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

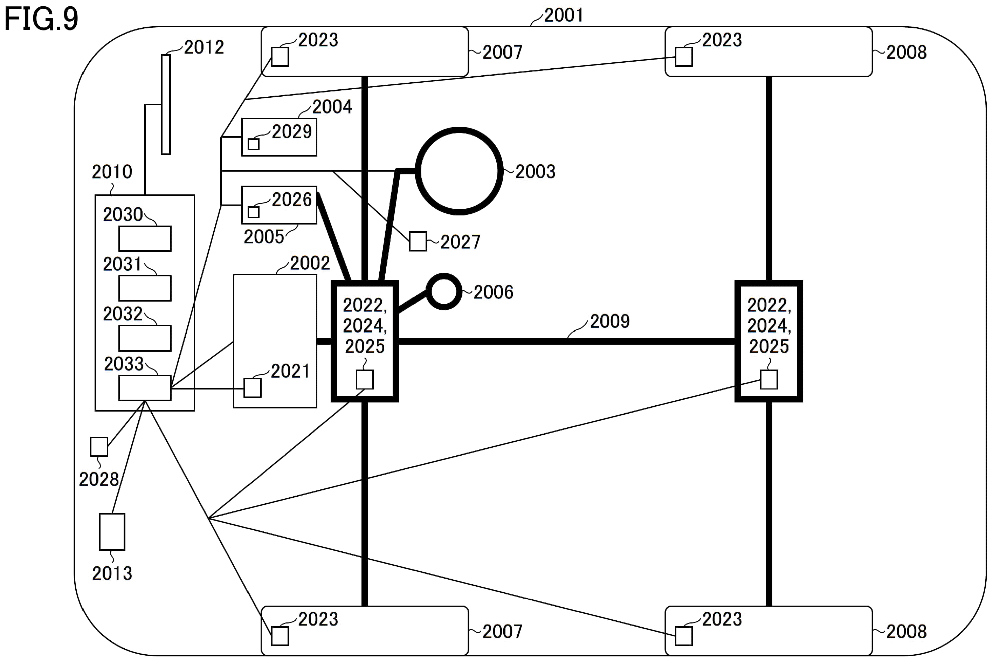

Fig. 9 shows an example of a configuration of a vehicle 2001. As shown in Fig. 9, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheels or the rear wheels, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 that senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 can communicate with the microprocessor 2031 and components of the vehicle 2001 via a communication port. For example, the communication module 2013 transmits and receives data via a communication port 2033, to and from a drive unit 2002, a steering unit 2003, an accelerator pedal 2004, a brake pedal 2005, a shift lever 2006, front wheels 2007, rear wheels 2008, an axle 2009, a microprocessor 2031 and a memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2028 described above input to the electronic control unit 2010, information obtained based on the signals, and information based on an input from the outside (a user) obtained via the information service unit 2012, to the external apparatus via radio communication. The electronic control unit 2010, the various sensors 2021 to 2028, the information service unit 2012, and the like may be referred to as input units that receive input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display, a speaker, or the like, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Embodiment summary)

As described above, according to an embodiment of the present invention, a terminal is provided. The terminal includes: a control unit configured to determine a number of layers and a number of codewords applied to DFT-s-OFDM (Discrete Fourier transform - spread - Orthogonal Frequency Division Multiplexing) PUSCH (Physical Uplink Shared Channel), map each codeword to a plurality of layers, perform precoding as needed, configure DMRS (Demodulation reference signal) and PTRS (Phase tracking reference signal), and generate a signal of the DFT-s-OFDM PUSCH; and a transmission unit configured to transmit the signal of the DFT-s-OFDM PUSCH.

According to the above-described configuration, multi-layer DFT-s-OFDM PUSCH or multi-layer DFT-s-OFDM PDSCH can be transmitted and received. In other words, waveforms and transmission methods can be controlled in the wireless communication system.

A maximum number of the codewords may be equal to a maximum number of codewords for CP-OFDM (Cyclic Prefix - Orthogonal Frequency Division Multiplexing). According to the above-described configuration, multi-layer DFT-s-OFDM PUSCH or multi-layer DFT-s-OFDM PDSCH can be transmitted and received.

The control unit may map each codeword to a plurality of layers based on a maximum number of layers per codeword. According to the above-described configuration, multi-layer DFT-s-OFDM PUSCH or multi-layer DFT-s-OFDM PDSCH can be transmitted and received.

The control unit may configure a number of PTRS groups based on a number of layers. According to the above-described configuration, multi-layer DFT-s-OFDM PUSCH or multi-layer DFT-s-OFDM PDSCH can be transmitted and received.

The control unit may use a precoder whose number of precoding matrices is less than that for CP-OFDM PUSCH. According to the above-described configuration, multi-layer DFT-s-OFDM PUSCH or multi-layer DFT-s-OFDM PDSCH can be transmitted and received.

In addition, according to an embodiment of the present invention, a communication method performed by a terminal is provided. The communication method includes: determining a number of layers and a number of codewords applied to DFT-s-OFDM (Discrete Fourier transform - spread - Orthogonal Frequency Division Multiplexing) PUSCH (Physical Uplink Shared Channel), mapping each codeword to a plurality of layers, performing precoding as needed, configuring DMRS (Demodulation reference signal) and PTRS (Phase tracking reference signal), and generating a signal of the DFT-s-OFDM PUSCH; and transmitting the signal of the DFT-s-OFDM PUSCH.

According to the above-described configuration, multi-layer DFT-s-OFDM PUSCH or multi-layer DFT-s-OFDM PDSCH can be transmitted and received. In other words, waveforms and transmission methods can be controlled in the wireless communication system.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination as needed, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described related to an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may each be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, notification of information may be implemented by using physical layer signaling (for example, downlink control information (DCI), uplink control information (UCI)), higher layer signaling (for example, radio resource control (RRC) signaling, medium access control (MAC) signaling), broadcast information (master information block (MIB), system information block (SIB)), and other signals or combinations thereof. Also, RRC signaling may be referred to as an "RRC message," and can be, for example, an RRC connection setup message, an RRC connection reconfiguration message, and so on.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, or a next generation system enhanced therefrom. In addition, a plurality of systems may be combined (for example, a combination of: at least one of LTE or LTE-A; 5G, and the like) to be applied.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in the present disclosure may be implemented by a value (0 or 1) represented by one bit, by a Boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because various channels (e.g., PUCCH, PDCCH, or the like) and information elements may be identified by any suitable names, the various names assigned to these various channels and information elements are not used as limitations.

In the present disclosure, the terms "Base Station (BS)", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as the terms such as a "macro cell," a "small cell," a "femto cell," a "pico cell," and so on.

A base station can accommodate one or a plurality of (for example, three) cells. When a base station supports a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, terms such as "mobile station (MS)", "user terminal", "user equipment (UE)", "terminal", and the like, may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station is an object that can move, and the moving speed can be any speed. In addition, a mobile station that is not moving is also included. Examples of the moving object include, but are not limited to, a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone (registered trademark), a multicopter, a quadcopter, a balloon, and an object mounted on any of these. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Furthermore, the base station in the present disclosure may be interpreted as a user terminal. For example, each aspect/embodiment of the present disclosure may be applied to the structure in which communications between a base station and a user terminal is replaced with communications between a plurality of terminals 20 (for example, which may be referred to as Device-to-Device (D2D), Vehicle-to-Everything (V2X), and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompass a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) that does not depend on the numerology.

Numerology may be a communication parameter applied to at least one of transmission or reception of a certain signal or channel. The numerology may indicate at least one of, for example, subcarrier spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain (OFDM (Orthogonal Frequency Division Multiplexing) symbols, SC-FDMA (Single Carrier Frequency Division Multiple Access) symbols, and the like). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as PDSCH (or PUSCH) mapping type A. A PDSCH (or PUSCH) transmitted using a mini-slot may be referred to as PDSCH (or PUSCH) mapping type B.

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI," a plurality of consecutive subframes may be referred to as a "TTI," or one slot or one mini-slot may be referred to as a "TTI." In other words, at least one of a subframe or a TTI may be a subframe (1 ms) in the conventional LTE, may be a period shorter than 1 ms (for example, 1 to 13 symbols), or may be a period longer than 1 ms. It is to be noted that the unit representing TTI may be referred to as a slot, a mini-slot, or the like, instead of a subframe.

Here, a TTI refers to the minimum time unit of scheduling in radio communication, for example. For example, in LTE systems, a base station performs, for each terminal 20, scheduling of allocating radio resources (such as a frequency bandwidth and transmission power that can be used by each terminal 20) in TTI units. It is to be noted that the definition of the TTI is not limited to the above-described definition.

The TTI may be a transmission time unit for channel-encoded data packets (transport blocks), code blocks, codewords, or the like, or may be a unit of processing in scheduling, link adaptation, or the like. It is to be noted that, when a TTI is provided, a time period (for example, the number of symbols) to which transport blocks, code blocks, codewords, or the like are actually mapped may be shorter than the TTI.

It is to be noted that, in a case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a normal TTI (TTI in LTE Rel. 8 to Rel. 12), a long TTI, a normal subframe, a long subframe, a slot, or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

It is to be noted that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and having a TTI length equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of the numerology, and may be 12, for example. The number of subcarriers included in an RB may be determined based on the numerology.

In addition, an RB may include one or a plurality of symbols in the time domain, and may have a length of one slot, one mini-slot, one subframe, or one TTI. One TTI, one subframe, and the like, may each be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource area including one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be identified by an RB index based on the common reference point of the carrier. PRBs may be defined by a certain BWP and may be numbered in the BWP.

A BWP may include a BWP for UL (UL BWP) and a BWP for DL (DL BWP). One or a plurality of BWPs may be configured in one carrier for UE.

At least one of configured BWPs may be active, and the UE is not required to expect to transmit/receive a certain signal/channel outside the active BWP. It is to be noted that that a "cell", a "carrier", or the like, in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Memory
1003 Storage
1004 Communication apparatus
1005 Input apparatus
1006 Output apparatus

## Claims

1. A terminal comprising:
a control unit configured to determine a number of layers and a number of codewords applied to DFT-s-OFDM (Discrete Fourier transform - spread - Orthogonal Frequency Division Multiplexing) PUSCH (Physical Uplink Shared Channel), map each codeword to a plurality of layers, perform precoding as needed, configure DMRS (Demodulation reference signal) and PTRS (Phase tracking reference signal), and generate a signal of the DFT-s-OFDM PUSCH; and
a transmission unit configured to transmit the signal of the DFT-s-OFDM PUSCH.

2. The terminal as claimed in claim 1, wherein
a maximum number of the codewords is equal to a maximum number of codewords for CP-OFDM (Cyclic Prefix - Orthogonal Frequency Division Multiplexing).

3. The terminal as claimed in claim 1, wherein
the control unit maps each codeword to a plurality of layers based on a maximum number of layers per codeword.

4. The terminal as claimed in claim 1, wherein
the control unit configures comb-structured DMRS in a frequency domain based on a number of antenna ports.

5. The terminal as claimed in claim 1, wherein
the control unit configures a number of PTRS groups based on a number of layers.

6. A communication method performed by a terminal, the communication method comprising:
determining a number of layers and a number of codewords applied to DFT-s-OFDM (Discrete Fourier transform - spread - Orthogonal Frequency Division Multiplexing) PUSCH (Physical Uplink Shared Channel), mapping each codeword to a plurality of layers, performing precoding as needed, configuring DMRS (Demodulation reference signal) and PTRS (Phase tracking reference signal), and generating a signal of the DFT-s-OFDM PUSCH; and
transmitting the signal of the DFT-s-OFDM PUSCH.
